# EUROPEAN PATENT APPLICATION

(11) **EP 3 051 230 A1**
(43) Date of publication of application: **03.08.2016**
(21) Application number: 15075004.0
(22) Date of filing: 29.01.2015
(51) Int. Cl.: F25B 15/00, F25B 40/00, F25B 23/00

(54) **Multi-effect working / Cooling cycles based plants**

(71) Applicant: Staicovici, Mihail-Dan, Bucharest (RO)
(72) Inventor: Staicovici, Mihail-Dan, Bucharest (RO)

(57) **Abstract**

An absorption cooling cycle plant is integrating in its structure a Rankine cycle plant, giving birth to the Cooling Rankine Absorption Cycle based plant, in short CRAC. A high pressure generator (1), connected to the external heat source (2), is supplied by the rich absorbent (3) and generates the refrigerant vapor (10), which is rectified with the help of the sink source (9). A fraction (11) of the rectified refrigerant vapor (10) passes through the 3-way valve (12) and enters the high pressure cooling cycle plant condenser (13) where is condensed by the external sink source (14) and is stored in the refrigerant storage tank (15). The refrigerant condensate (16), coming of the storage tank (15), is subcooled, subsequently it passes through the 3-way valve (21), it is expanded from the high pressure to the low pressure in the expansion valve (22) and enters the low pressure cooling cycle plant evaporator (19), where it evaporates and produces useful cooling effect. Further on, the not evaporated refrigerant (26) is stored in the storage tank (25) and then is evacuated and enters the essentially same low pressure absorber (4), namely the absorber reservoir (27). The plant single stage cooling cycle closes when the refrigerant vapor (18), coming of the cooling cycle plant evaporator (19), is superheated in the subcooler (17) and then enters the low pressure absorber (4), where is absorbed by the poor absorbent (7) and where the absorption process heat is evacuated with the help of the sink source (28). The Rankine cycle plant is supplied by the rectified vapor (29), complementary with vapor (11), both coming of the rectified vapor (10). The vapor (29) is superheated in the superheater (30) with the help of the heat source (31) and becomes superheated vapor (32). Subsequently, the vapor (32) is expanded in the turbogenerator 33() and produces useful electricity or work, then exits from the turbogenerator (33) as vapor (34) with an intermediate pressure, established by the expansion valve (35). Further, the vapor (34) is condensed in the coil (36) of the Rankine cycle plant intermediary pressure condenser (20) at a temperature close to that of the evaporation temperature, achieved by refrigerant (16) of the cooling cycle, which passes through the 3-way valve (21), it expands with the expansion valve (37), it evaporates in the Rankine cycle plant condenser (20) on the coil (36) external surface and the resulting vapor is superheated in the subcooler (17), it is absorbed in the absorber (4) and the not evaporated part is stored in the storage tank (25). Further on, the vapor (34) condensed in the coil (36) is stored in the liquid storage tank (38), is pumped with the help of the pump (39) through the pipe (40) from the intermediate pressure till the high pressure of the cooling cycle condenser (13) and is mixed up with the refrigerant condensate in the condenser reservoir (15), in order to close the Rankine cycle plant and the CRAC. Within the frame of the invention, the individual CRAC plants are connected in thermal cascades, supplied by a sensible or latent heat sources, by a sink source and by a source to be cooled, in order to build multi-effect working/cooling cycle based plants.

## Description

The present invention is destined to production of separate or combined working / cooling supplied by low to medium temperature sensible or latent heat sources.

Firstly, the absorption cooling plants are confronted usually with periods of full capacity operation, which alternate with periods of partial load running. Besides this, many of them, not all, are supplied by depleted or free heat sources, available full time and with full capacity, even in periods of partial load operation. Unfortunately, during these periods the heat source might not be fully capitalized on, i.e. a complementary part, which wouldn't be involved in cooling, could be wasted.
Secondly, first opportunity to use a binary working combination in order to produce work / electricity was created by the inverted version of the hybrid absorption plant, introduced by Osenbrück (1895). It took about a century for a more notable absorption working plant be proposed on a larger industrial scale (Kalina, 1984). It is run by *NH₃ - H₂O* and supplied usually by recovered low to middle temperature heat sources (e.g. (80-350)°C), in order to produce just mechanical work / electricity. Since than, a lot of absorption plants, operated mainly by *NH₃ - H₂O*_{,} have been proposed for work / cooling production (e.g. Vidal et al., 2006, Liu Meng, 2007, Zhang, 2007, Sadrameli, 2007, Wang et al., 2008, Schuster et al., 2009, Sun et al., 2013, Ayon et al., 2013, Lopez-Villada et al., 2014). Each of these plants are innovative to a certain extent, although essentially have more or less as model the Kalina plant. As a general remark, in all papers mentioned so far the working plants analysed have working fluid condensers cooled by natural sink sources, with temperatures offered by the ambiance. For this reason, the exergy efficiency of these cycles is satisfactory (e.g. *η_{exergy}* = *0.35 - 0.50*), but the cooling temperature and the turbogenerator specific working capacities are quite limited.
Thirdly, besides a first task, aiming at generating power with high efficiency in order to reduce primary energy consumption, the global warming we experience lately confronts the power engineer with a second task too, that of producing working energy with reduced environmental impact. One way to fulfil it consists of capitalizing on the renewable energies (e.g. geothermal, solar, biomass, photovoltaic) and low to middle temperature heat sources, coming mainly of industry. So far the multi-effect cooling / heating cycles plants are already making it, thermally cascading absorption heat pump and heat transformer cycles based plants (e.g. Alefeld, 1982, Ziegler, 1987, 1993, Staicovici, 2014) in order to produce effective cooling / heating, but unfortunately the working / cooling does not benefit from this technology yet.

A first object of the present invention is to improve an absorption cooling plant such that the disadvantage of partial load operation is avoided and that in particular during these periods the heat source complementary part, which wouldn't be involved in cooling, be fully capitalized on in a different useful way.

A second object of the present invention is to improve an absorption plant producing working / cooling such that the disadvantage of limited cooling temperature and turbogenerator specific working capacity be considerably avoided.
A third object of the present invention is to improve efficiency / effectiveness of absorption plant producing working / cooling such that to benefit from the multi-effect technology.

The invention achieves the first object by designing the absorption cooling plant in such a way that during partial load operation the heat source full capacity supply and full vapor generation are preserved, but the complementary vapor fraction generated by the complementary heat load is used to supply a Rankine plant, perfectly integrated in the absorption cooling plant, in order to produce useful work / electricity. The new resulted plants incorporation, based on absorption cooling and Rankine cycles, gives birth to a new cycle based plant named Cooling-Rankine Absorption Cycle based plant, in short CRAC.
The invention achieves the second object during partial load operation of absorption cooling plant by preserving the same cooling temperature as that of full operation, while the complementary cooling capacity is used to condensate the complementary fraction of the working fluid which the Rankine plant is supplied with. This technical solution ensures a much lower condensing temperature of Rankine plant working fluid than the ambient temperature, close to that of absorption cooling plant cooling-evaporation temperature and implicitely a considerable increase of CRAC turbogenerating process specific working capacitiy as compared to that of working plants having generation at same temperature, but condensation close to temperatures offered by the ambiance.
The invention achieves the third object through the extention of CRAC use to achievement of plants based on Multi-effect Working / Cooling Cycles, in short MeW/CC, supplied either by sensible or by latent heat sources. The MeW/CC is thermally cascading CRAC subcycles in a quite alike manner as multi-effect cooling / heating cycles, in short MeC/HC, are cascading absorption heat pump and heat transformer cycles based plants, provided the following MeW/CC rules be applied:
1. Given the operation principle of CRAC, its absorption heat and rectification heat, if the case, can be fully recovered in a MeW/CC cascade, only; the desorption-evaporation heat cannot be capitalized on by a MeW/CC, as it happens to MeC/HC, where a cooling cycle based plant is associated with a heat transformer cycle based plant, see for example Alefeld, 1982, Ziegler, 1987, 1993, because it is used as sink source by the Rankine cycle plant condenser, and the resorption heat cannot be fully recovered, because most part of the generated vapor, corresponding to complementary generated-rectified vapor fraction of *f* ≅ *0.67 - 0.98* is directed to Rankine cycle plant instead to resorber, when just work is desired to be produced; the MeW/CC can recover also just the absorption heat, as it is practiced to MeC/HC, see e.g. cooling double-effect cycle plant R3, pg. 292, of Alefeld, 1982, Ziegler and Alefeld, 1985, Ziegler et al. 1993;
2. The subcycles *i , i* =*1*,*2*,*..., n,* of the cascade supplied by a sensible heat source are thermally connected in series and optionally in series-parallel; in both cases, each cascade subcycle generator has a distinct sensible heat input and a heat supply recovered from subcycles operated by higher generator temperatures, comparatively; on the contrary, the subcycles *i, i* = 1*,2*,..., *n,* of the cascade supplied by a latent heat source cannot be connected but in series, only, for obvious reasons;
3. MeW/CC has a modular structure; for this reason, the subcycles *i, i = 1,2,...,n,* of the cascade are completely independent one another regarding the absorption cooling type, e.g. nontruncated or truncated with coabsorbent (Staicovici, 2014), and the refrigerant-absorbent combinations which these are working with, provided that theirs operating parameters, i.e. temperatures, heats released / received, etc., be appropriate for being thermally connected in a MeW/CC cascade;
4. Unlike known MeC/HC cascades, in case of MeW/CC the desorption-evaporation temperature of subcycle *i, i* = *2,3,..., n*, can be higher than the 1st (*i* = *1*) subcycle sink source temperature; in this case, the working output of subcycle *i* is maximized on account of the cooling effect, which is set to zero.

- According to present invention, the absorption cooling plant operating with partial load and fulfiling first object avoids the complementary heat source capacity be wasted. On the contrary, it capitalizes on it in order to produce useful work / electricity, as a first technical and eonomical advantage;
- According to present invention, given CRAC operation which fulfils second object, the tubogenerator benefits of an increased specific working capacity and the cooling temperatures can be as low as those of the absorption cooling plant which CRAC comes of, as second technical and eonomical advantages;
- According to present invention fulfiling third object, the MeW/CC is benefited twice, firstly by an increased 1^{st} principle efficiency / effectiveness in working / cooling, and secondly by cascading CRAC type subcycles plants, which have the advantages mentioned prior.

The invention is described by the following figures, which represent examples of invention achievement:

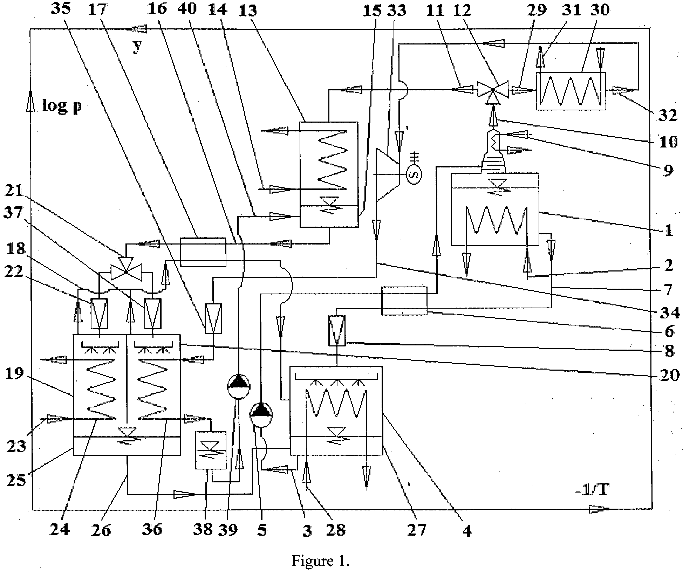

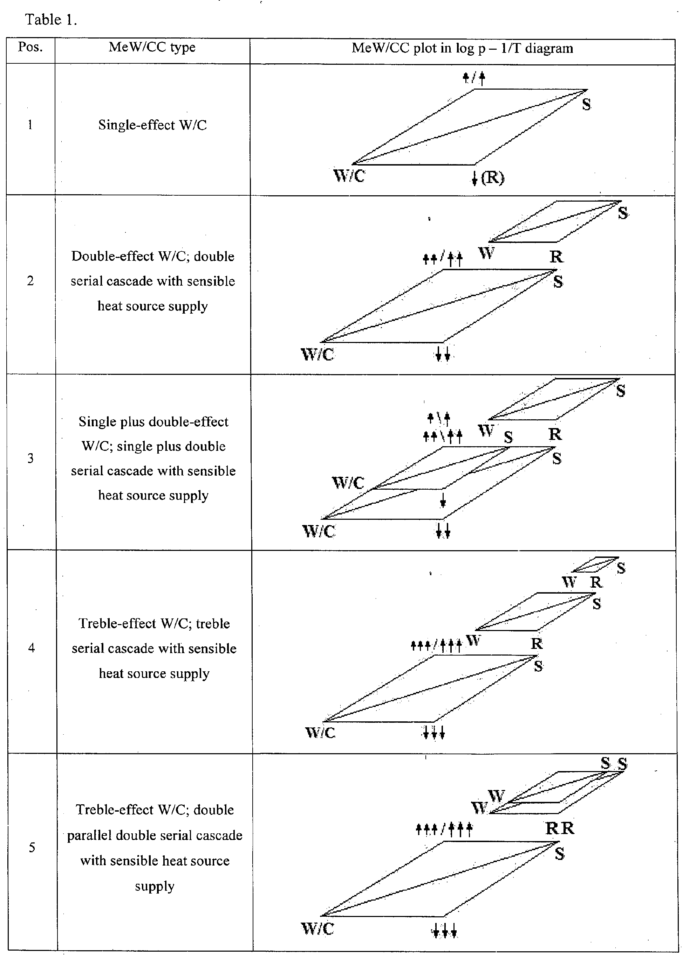

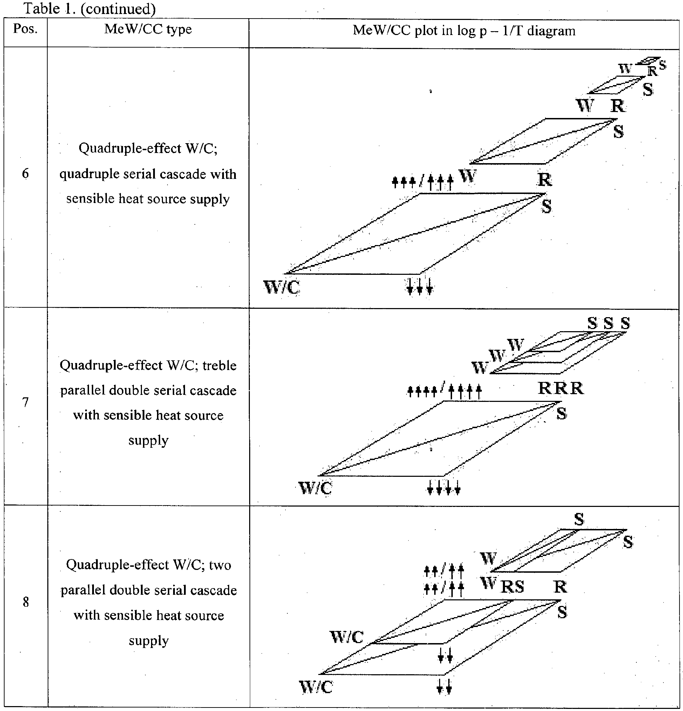

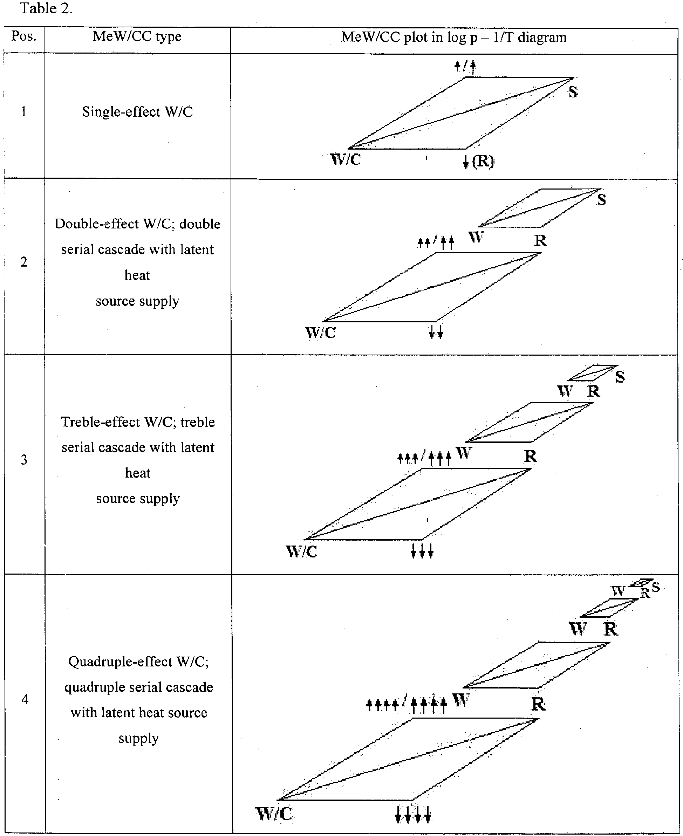

Figure 1-Representation in a log p-1/T diagram of a CRAC based plant for producing separate or combined working / cooling;
Table 1-Representation in a log p-1/T diagram of the most important MeW/CC based on CRAC thermal cascades for producing separate or combined working / cooling, supplied by a sensible heat source;
Table 2-Representation in a log p-1/T diagram of the most important MeW/CC based on CRAC thermal cascades for producing separate or combined working / cooling, supplied by a latent heat source;
Figure 2- Representation in a log p-1/T diagram of a treble-effect working / cooling cycle based plant supplied by a sensible heat source;
Figure 3- Representation in a log p-1/T diagram of a treble-effect working / cooling cycle based plant supplied by a latent heat source;

The absorption cooling cycle of CRAC, shown in Figure 1 and integrating in its structure a Rankine cycle plant, in short RC, is the most known and simple one, i.e. of single-stage type. However, CRAC is not confined to the use of a particular absorption type cycle plant, theoretically, many other absorption cooling cycles plants could be coupled with the RC within the frame of our concept, as rule no. 3 above states. Making reference just to the operation of CRAC of Figure 1, the high pressure generator 1, connected to the external heat source 2, is supplied by the rich absorbent 3, coming of the low pressure absorber 4, with the help of pump 5. Prior to enter the generator 1, the rich absorbent 3 is preheated in the HE 6 in a recovering way, subcooling the poor absorbent 7 coming of generator 1 and supplying the absorber 4 through the expansion valve 8. The generator 1 generates the refrigerant vapor 10, which is rectified with the help of the sink source 9. A fraction 11 of the rectified refrigerant vapor 10 passes through the 3-way valve 12 and enters the high pressure cooling cycle plant condenser 13. Here, it is cooled and condensed by the external sink source 14, then it is stored in a storage tank or reservoir 15 of the refrigerant cooling cycle plant condenser 13. The refrigerant condensate 16, coming of the storage tank 15, is subcooled in a recovering way in the subcooler 17, superheating the vapor 18 coming of the low pressure cooling cycle plant evaporator 19 and / or RC condenser 20, and subsequently passes through the 3-way valve 21, where it is expanded from the high pressure to the low pressure in the expansion valve 22, in order to enter the low pressure cooling cycle plant evaporator 19. The useful cooling effect is obtained in the cooling cycle plant evaporator 19, where the source to be cooled 23 passes through the evaporator coil 24 and is cooled by the evaporation of the low pressure refrigerant 16 on the coil 24 external surface. The rest of the not evaporated refrigerant is stored in the evaporator storage tank or reservoir 25. Further on, the not evaporated refrigerant 26, coming of the storage tank 25, is evacuated and enters the essentially same low pressure absorber 4, namely the absorber reservoir 27. The single stage cooling cycle closes when the refrigerant vapor 18, coming of the cooling cycle plant evaporator 19, is superheated in the subcooler 17 and then enters the low pressure absorber 4, where is absorbed by the poor absorbent 7 and where the absorption process heat is evacuated with the help of the sink source 28. The RC is supplied by the rectified vapor 29, complementary with the vapor11, both coming of the rectified vapor 10. The vapor 29 is superheated in the superheater 30 with the help of the heat source 31 and becomes superheated vapor 32. Subsequently, the vapor 32 is expanded in the turbogenerator 33 and produces useful electricity or work, then exits from the turbogenerator 33 as vapor 34 with an intermediate pressure, established by the expansion valve 35. Further, the vapor 34 is condensed in the coil 36 of the RC intermediary pressure condenser 20 at a temperature close to that of the evaporation temperature, achieved by refrigerant 16 of the cooling cycle, which passes through the 3-way valve 21, it expands with the expansion valve 37, it evaporates in the RC condenser 20 on the coil 36 external surface, the resulting vapor is superheated in the subcooler 17 and it is absorbed in the absorber 4 and the not evaporated part is stored in the storage tank 25. Further on, the vapor 34 condensed in the coil 36 is stored in the liquid storage tank 38, is pumped with the help of the pump 39 through the pipe 40 from the intermediate pressure till the high pressure of the cooling cycle condenser 13, and is mixed up with the refrigerant condensate in the condenser reservoir 15, in order to close the RC and the CRAC.

Table 1 represents graphically in the log p-1/T diagram the most important multi-effect working/cooling cycles based plants, supplied by a sensible heat source and respecting the MeW/CC rules 1-4. For the sake of clarity, a sensible heat source is characterized by the delivery of heat within a finite interval of temperatures, without changing the phase. The position 1 represents schematically a single-effect CRAC based plant, where: S=generator+rectifier+superheater heat source supply, R=heat released by subcycle *i* + *1*, operating to higher generation-rectification-superheating temperature, and recovered by first adjacent subcycle *i*, operating to lower generation-rectification-superheating temperature, *i = 1,2,..., n*; W/C is the useful working/cooling effect to turbogenerator and desorber-evaporator, respectively; ↓/↑, ..., ↑↑↑↑/↑↑↑↑=heats released during W/C working/cooling operation mode by the cooling cycle condenser or resorber to a sink source, for single- to quadruple-effect, respectively; ↓, ... , ↓↓↓↓ = heats released by the absorber to a sink source, for single- to quadruple-effect, respectively. The positions 2-8 represent double-treble- and quadruple-effect working/cooling cascades consisting of CRAC subcycles based plants thermally connected in the way shown by the third column of Table 1. Next, a short description of them is done:
- Pos. 2 is a double-effect, double serial cascade plant. The top CRAC, i=2, is supplied by S, it delivers useful W and releases R recovered by the bottom CRAC, i=1, which is supplied also by S, it releases ↑↑/↑↑ and ↓↓, and delivers useful W/C;
- Pos. 3 is a single plus double-effect, single plus double serial cascade plant. The top CRAC, i=3, is supplied by S, it delivers useful W and releases R recovered by the middle CRAC, i=2, which is supplied also by S, it releases ↑↑/↑↑ and ↓↓, and delivers useful W/C. The bottom CRAC, i=1, is supplied by S, it releases ↑/↑and ↓, and delivers useful W/C;
- Pos. 4 is a treble-effect, treble serial cascade plant. The top CRAC, i=3, is supplied by S, it delivers useful W and releases R recovered by the middle CRAC, i=2. This CRAC is supplied also by S, it delivers useful W and it releases R recovered by the bottom CRAC, i=1, which is supplied also by S, it releases ↑↑↑/↑↑↑ and ↓↓↓, and delivers useful W/C;
- Pos. 5 is a treble-effect, double parallel double serial cascade plant. The top CRAC, i=3, is supplied by S, it delivers useful W and releases R recovered by the bottom CRAC, i=1. The middle CRAC, i=2, operating in parallel to CRAC i=3, is supplied by S, it delivers useful W and releases R, recovered as well by the bottom CRAC, i=1, which releases ↑↑↑/↑↑↑ and ↓↓↓, and delivers useful W/C;
- Pos. 6 is a quadruple-effect, quadruple serial cascade plant. The top CRAC, i=4, is supplied by S, it delivers useful W and it releases R recovered by the top-middle CRAC, i=3. This CRAC is supplied by S, it delivers useful W and it releases R recovered by the bottom-middle CRAC, i=2. This CRAC is supplied by S, it delivers useful W and it releases R recovered by the bottom CRAC, i=1, which is supplied by S, it releases ↑↑↑↑/↑↑↑ and ↓↓↓↓, and delivers useful W/C;
- Pos. 7 is a quadruple-effect, treble parallel double serial cascade plant. The top CRAC, i=4, is supplied by S, it delivers useful W and it releases R recovered by the bottom CRAC, i=1. The top-middle CRAC, i=3, operating in parallel to CRAC i=4, is supplied by S, it delivers useful W and it releases R, recovered as well by the bottom CRAC, i=1. The bottom-middle CRAC, i=2, operating in parallel to CRAC i=4 and i=3, is supplied by S, it delivers useful W and it releases R, recovered again by the bottom CRAC, i=1. The bottom CRAC, i=1, is supplied as well by S, it releases ↑↑↑↑/↑↑↑ and ↓↓↓↓, and delivers useful W/C;
- Pos. 8 is a quadruple-effect, two parallel double serial cascade plant. The top CRAC, i=4, is supplied by S, it delivers useful W and it releases R, recovered by the bottom-middle CRAC, i=2, which is supplied by S, it releases ↑↑/↑↑ and ↓↓, and delivers useful W/C; The top-middle CRAC, i=3, operating in parallel to CRAC i=4, is supplied by S, it delivers useful W and it releases R, recovered by the bottom CRAC, i=1, which is supplied by S, it releases ↑↑/↑↑ and ↓↓, and delivers useful W/C;

Table 2 represents graphically in the log p-1/T diagram the most important multi-effect working/cooling cycles based plants, supplied by a latent heat source and respecting the MeW/CC rules 1-4. For the sake of clarity, a latent heat source is characterized by the delivery of heat at constant temperature, during a phase change process. The explanation concerning the position 1 of this Table and the added comments regarding the symbols used hold true here as well, and will be not repeated. The positions 2-4 represent double- treble- and quadruple-effect working/cooling cascades consisting of CRAC subcycles based plants thermally connected in series in the way shown by the third column of Table 2. Next, a short description of them is done:
- Pos. 2 is a double-effect, double serial cascade plant. The top CRAC, i=2, is supplied by S, it delivers useful W and releases R recovered by the bottom CRAC, i=1, which releases ↑↑/↑↑ and ↓↓, and delivers useful W/C;
- Pos. 3 is a treble-effect, treble serial cascade plant. The top CRAC, i=3, is supplied by S, it delivers useful W and releases R recovered by the middle CRAC, i=2. This CRAC delivers useful W and it releases R recovered by the bottom CRAC, i=1, which releases ↑↑↑/↑↑↑ and ↓↓↓, and delivers useful W/C;
- Pos. 4 is a quadruple-effect, quadruple serial cascade plant. The top CRAC, i=4, is supplied by S, it delivers useful W and it releases R recovered by the top-middle CRAC, i=3. This CRAC delivers useful W and it releases R recovered by the bottom-middle CRAC, i=2. This CRAC delivers useful W and it releases R recovered by the bottom CRAC, i=1, which releases ↑↑↑↑/↑↑↑↑ and ↓↓↓↓, and delivers useful W/C.

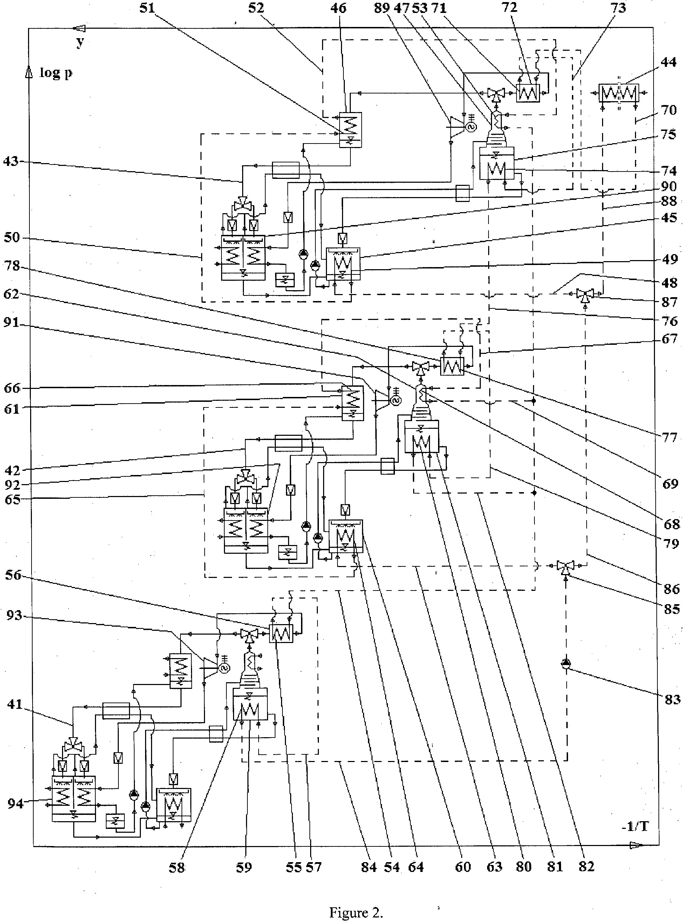

Figure 2 shows an example, represented in the log p-1/T diagram, of a treble-effect working/cooling plant consisting of three CRAC subcycles plants thermally connected by means of a double parallel double serial cascade and supplied by a sensible heat source, according to MeW/CC of Table 1, position 5. The cascade CRAC subcycles plants are labeled by 1^{st} CRAC, 41, 2^{nd} CRAC, 42, and 3^{rd} CRAC, 43, ordered in respect to generator temperature increase and are shown in Figure 2 by solid line. The sensible heat source provides the unique, external and highest temperature supply and is labeled by 44. According to Table 1, position 5 and to rule 1 of MeW/CC, in our particular case CRAC 41 is supplied to its generator and superheater on one side by the recovered heat released by the absorbers, condensers and rectifiers of CRAC 42 and CRAC 43 subcycles plants and on the other side by the heat coming of the sensible heat 44, while the generators and superheaters of CRAC 42 and CRAC 43 are supplied only once each with the heat coming of the sensible heat 44. The above assertions relative to heat suply are next described in more detail and are graphically represented by dashed line in Figure 2. The heat released by absorber 45, condenser 46 and rectifier 47, all belonging to CRAC 43 subcycle plant, is recovered by an intermediary heat transfer fluid covering in series the circuit consisting of pipe 48, absorber coil 49, pipe 50, condenser coil 51, pipe 52 and rectifier coil 53. The cumulated heat released by CRAC 43 subcycle plant is transported by means of pipe 54 and released by means of coil 55 to vapor superheater 56 and further by means of pipe 57 and coil 58 to generator 59 of CRAC 41. Similarly, the heat released by absorber 60, condenser 61 and rectifier 62, all belonging to CRAC 42 subcycle plant, is recovered by an intermediary heat transfer fluid covering serially the circuit consisting of pipe 63, absorber coil 64, pipe 65, condenser coil 66, pipe 67, rectifier coil 68 and pipe 69, connected to pipe 54. The cumulated heat released by CRAC 42 subcycle plant is transported by means of the same pipe 54 and released by means of coil 55 to vapor superheater 56 and further by means of pipe 57 and coil 58 to generator 59 of CRAC 41, overlapping in this way the heat supply of superheater 56 and generator 59 coming of CRAC 43. The heat coming of the sensible heat source 44 is serially supplying firstly by means of pipe 70 and coil 71 the vapor superheater 72, secondly by means of pipe 73 and coil 74, the generator 75 of CRAC 43, then by means of pipe 76 and coil 77, the vapor superheater 78, then by means of pipe 79 and coil 80, the generator 81 of CRAC 42, then by means of pipe 82, connected to pipe 54 and coil 55, the vapor superheater 56, and finally by means of pipe 57 and coil 58, the generator 59 of CRAC 41. The return of intermediary heat transfer fluid is ensured by the pump 83, mounted on pipe 84, connected to coil 58 of generator 59, and a return piping, consisting of a first 3-way valve 85 which supplies, on one side, the heat recovery circuit of CRAC 42 subcycle plant by means of the pipe 63 and a pipe 86 connected to a second 3-way valve 87, on the other side, which to its turn supplies the recovery circuit of CRAC 43 subcycle plant by means of the pipe 48, on one side, and a final pipe 88, connected to the inlet of the sensible heat source 44, on the other side. All heat supply described above is designed in such a way that the basic rules of a spontaneous heat transfer are respected, that is: i) there is a thermal capacity match between the fluids exchanging heat, or, in other words, the capacity of the former fluid to release (receive) heat equals that of the latter fluid to receive (release) heat; ii) the temperature of the fluid releasing heat is always higher than that of the fluid receiving heat with a certain temperature pinch. The second condition ii) can be verified formally, checking the relative position of the devices releasing and receiving heat, plotted in the log p-1/T diagram of Figure 2. Because the operation of each cascade CRAC subcycle plant is the same and has been already explained in the description of Figure 1, next a brief operation of the treble-effect working/cooling plott of Figure 2 is given, only. The unique high temperature heat supply of generator 75 from the heat source 44 has as 1^{st} useful effect a working yield of the turbogenerator 89 of CRAC 43 subcycle plant. This subcycle plant cannot produce but working, only, because, according to rule 4 of MeW/CC, which has been applied in this example in order to maximize working output, its desorption-vaporization process takes place to temperatures higher than the CRAC 41 sink temperature, as it is easy to remark from Figure 2 plott. In this case, the CRAC 43 subcycle plant operation is made possible because the desorption-vaporization heat of each subcycle is extracted from the working fluid of CRAC 43 Rankine cycle plant condenser 90. The same is valid for the CRAC 42 subcycle plant, which receives the unique middle temperature heat supply of generator 81 from the heat source 44 and has as 2^{nd} useful effect a working yield of the turbogenerator 91. Similarly to CRAC 43 subcycle, the CRAC 42 subcycle plant cannot produce but working, only, as well, because its desorption-vaporization process takes place again to temperatures higher than the CRAC 41 sink temperature. In this case, the CRAC 42 subcycle operation is made possible because again the desorption-vaporization heat is extracted from the working fluid of CRAC 42 Rankine cycle plant condenser 92. The 3^{rd} useful separate or combined working and cooling yield is obtained by the turbogenerator 93 and desorber-evaporator 94 of CRAC 41 subcycle plant, respectively, which, as mentioned prior benefits of heat supply coming of the heat released by CRAC 42 and 43 subcycles plants and of the external heat source 44. It is expected that the useful effect output of CRAC 41 subcycle plant be highest quantitatively, because this subcycle has the highest heat supply out of all cascade subcycles plants. Also, because the separate or combined working and cooling has additive properties, the total working and cooling effect of all cascade CRAC 41-43 subcycles plants, obtained with the supply from a single external sensible high temperature heat source, is higher than that of CRAC 41 subcycle plant alone, wherefrom the Multi-effect Working/Cooling Cycle based plants denomination comes of.

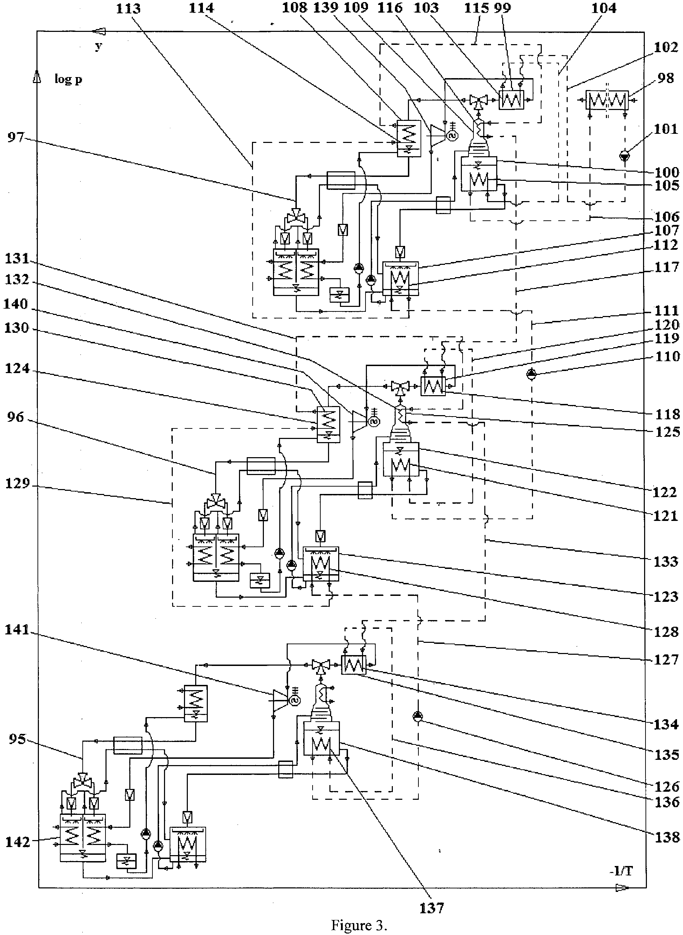

Figure 3 shows an example, represented in the log p-1/T diagram, of a treble-effect working/cooling consisting of three CRAC subcycles plants thermally connected by means of a treble serial cascade, supplied by a latent heat source, according to MeW/CC of Table 2, position 3. The cascade CRAC subcycles plants are labeled by 1^{st} CRAC, 95, 2^{nd} CRAC, 96, and 3^{rd} CRAC, 97, ordered in respect to generator temperature increase and are shown in Figure 3 by solid line. The latent heat source provides the unique, external and highest temperature supply and is labeled by 98. According to Table 2, position 3 and to rule 1 of MeW/CC, in our particular case CRAC 95 subcycle plant is supplied to its generator and superheater by the recovered heat released by the absorber, condenser and rectifier of CRAC 96, CRAC 96 subcycle plant is supplied to its generator and superheater by the recovered heat released by the absorber, condenser and rectifier of CRAC 97 and CRAC 97 subcycle plant is supplied to its generator and superheater by the latent heat source 98. The above assertions relative to heat suply are next described in more detail and are graphically represented by dashed line in Figure 3. The latent heat 98 supplies the superheater 99 and the generator 100 of CRAC 97 by means of an intermediary heat transfer fluid covering a closed circuit consisting of pump 101, mounted on heat source outlet pipe 102, superheater coil 103, pipe 104 and generator coil 105, connected to heat source inlet pipe 106. The heat recovered from absorber 107, condenser 108 and rectifier 109, all belonging to CRAC 97 subcycle plant, is transferred to CRAC 96 subcycle plant superheater and generator by an intermediary heat transfer fluid covering in series the circuit consisting of pump 110 mounted on pipe 111, absorber coil 112, pipe 113, condenser coil 114, pipe 115, rectifier coil 116, pipe 117, coil 118 of superheater 119, pipe 120, coil 121 of generator 122 and pipe 111, to close the circuit. The heat recovered from absorber 123, condenser 124 and rectifier 125, all belonging to CRAC 96 subcycle plant, is transferred to CRAC 95 subcycle plant superheater and generator by an intermediary heat transfer fluid covering in series the circuit consisting of pump 126 mounted on pipe 127, absorber coil 128, pipe 129, condenser coil 130, pipe 131, rectifier coil 132, pipe 133, coil 134 of superheater 135, pipe 136, coil 137 of generator 138 and pipe 127, to close the circuit. Next, a brief operation of the treble-effect working/cooling plott of Figure 3 is given, only. The unique high temperature heat supply of superheater 99 and generator 100 from the heat source 98 has as 1^{st} useful effect a working yield of the turbogenerator 139 of CRAC 97 subcycle plant. The same is valid for the CRAC 96 subcycle plant, which recovers to its superheater 119 and generator 122 the middle temperature heat released by the CRAC 97 subcycle plant and has as 2^{nd} useful effect a working yield of the turbogenerator 140. The 3^{rd} useful separate or combined working and cooling yield is obtained by the turbogenerator 141 and desorber-evaporator 142 of CRAC 95 subcycle plant, respectively, which, as mentioned prior benefits of low temperature heat supply for its superheater 135 and generator 138 coming of the heat released by CRAC 96. This subcycles plant CRAC 96 and 97 cannot produce but working, only, as shown for the similar subcyles plant to the description of Figure 2. Also, these subcycles plant operation, made possible because of the desorption-vaporization process appropriate running in case of CRAC, has been explained as well to the description of Figure 2. Because the separate or combined working and cooling has additive properties, the total working and cooling effect of all cascade CRAC 95-97 subcycles plants, obtained with the supply from a single external latent high temperature heat source, is higher than that of every cascade CRAC subcycle plant alone, wherefrom the Multi-effect Working/Cooling Cycle based plant denomination comes of in case of latent heat supply as well.

### REFERENCES

1. Ayon Dereje S., Bruno Joan Carles, Saravanan Rajagopal, Coronas Alberto, 2013, An overview of combined absorption power and cooling cycles. Renewable and Sustainable Energy Revews 21, 728-748.
2. Kalina Al., 1984, Combined cycle system with novel botom cycle. ASME J Eng Gas Turb Power, 106, 737-742.
3. Liu Meng, Zhang Na, 2007, Proposal and analysis of a novel ammonia-water cycle for power and refrigeration cogeneration. Energy 32, 961-970.
4. Lopez-Villada Jesus, Ayon Dereje S., Bruno Joan Carles, Coronas Alberto, 2014, Modeling simulation and analysis of solar absorption power-cooling systems. Int J Refrigeration 39, 125-136.
5. Osenbrück A., 1895, Verfahren zur Kälteerzeugung bei Absorptionsmachinen, in Kaiserliches Patentamt, Germany.
6. Sadrameli S.M., Goswami D.Y., 2007, Optimum operation conditions for a combined power and cooling thermodynamic cycle. Applied Energy 84, 254-266.
7. Schuster A., Karellas S., Kakaras E., Spliethof H., 2009, Energetic and economic investigation of organic RC applications. Applied Thermal Engineering, 29, 1809-1817.
8. Staicovici M. D., 2014, Coabsorbent and Thermal Recovery Compression Heat Pumping Technologies. Berlin-Heidelberg: Springer Verlag, 2014.
9. Sun Liuli, Han Wei, Zheng Danxing, Jin Hongguang, 2013, Assessment of an ammonia-water power/cooling cogeneration system with adjustable solution concentration. Applied Thermal Engineering 61, 443-450.
10. Vidal A., Best R., Rivero R. and Cervantes I., 2006, Analysis of a combined power and refrigeration cycle by the exergy method. Energy 31, 3401-3414.
11. Wang Jiangfeng, Dai Yiping, Gao Liu, 2008, Parametric analysis and optimization for a combined power and refrigeration cycle. Applied Energy, 85, 1071-1085.
12. Zhang Na, Lior Noam, 2007, Methodology for thermal design of novel combined refrigeration / power binary fluid systems. Int J Refr 30, 1072-1085.

## Claims

1. Invention based on the incorporation named CRAC of a Rankine cycle based plant into an absorption cooling cycle based plant, consisting mainly of a vapor generator, a turbogenerator group and a condenser, on one side, and of same vapor generator, a condenser, an evaporator and an absorber, on the other side, **characterized in that** the high pressure generator (1) connected to the external heat source (2) is supplied by the rich absorbent (3) coming of the low pressure absorber (4) with the help of pump (5), the said rich absorbent (3) prior to enter the said generator (1) is preheated in the heat exchanger (6) in a recovering way subcooling the poor absorbent (7) coming of said generator (1) and supplying said absorber (4) by means of the expansion valve (8), the said generator (1) generates the refrigerant vapor (10) which is rectified with the help of the sink source (9), a fraction (11) of the said rectified refrigerant vapor (10) passes through the 3-way valve (12) and enters the high pressure cooling cycle plant condenser (13) where it is cooled and condensed by the external sink source (14), then it is stored in a refrigerant storage tank (15) of the said cooling cycle plant condenser (13), the refrigerant condensate (16) coming of the said storage tank (15) is subcooled in a recovering way in the subcooler (17) superheating the vapor (18) coming of the low pressure cooling cycle plant evaporator (19) and / or Rankine cycle plant condenser (20) and subsequently passes through the 3-way valve (21) where it is expanded from the high pressure to the low pressure in the expansion valve (22) in order to enter the low pressure cooling cycle plant evaporator (19), the useful cooling effect is obtained in the said cooling cycle plant evaporator (19) where the source to be cooled (23) passes through the evaporator coil (24) and it is cooled by the evaporation of the said low pressure refrigerant (16) on the coil (24) external surface, the rest of the not evaporated refrigerant is stored in the storage tank (25), the not evaporated refrigerant (26) coming of the said storage tank (25) is evacuated and enters the essentially same low pressure said absorber (4) namely the absorber storage tank (27) and the single stage cooling cycle closes when the said refrigerant vapor (18) coming of the said cooling cycle plant evaporator (19) is superheated in the said subcooler (17) and enters the said low pressure absorber (4) where it is absorbed by the said poor absorbent (7) and where the absorption process heat is evacuated with the help of the sink source (28), similar to sink sources (9) and (14), while the Rankine cycle plant is supplied by the rectified vapor fraction (29) complementary with the said vapor fraction (11) and both coming of the said rectified vapor (10), the said vapor (29) is superheated in the superheater (30) with the help of the external heat source (31), similar to the said heat source (2) and becomes superheated vapor (32) which subsequently is expanded in the turbogenerator (33) and produces useful electricity or work, then exits from the said turbogenerator (33) as vapor (34) with an intermediate pressure established by the expansion valve (35), it is condensed in the coil (36) of the said Rankine cycle plant intermediary pressure condenser (20) at a temperature close to that of the evaporation temperature achieved by said refrigerant (16) of the cooling cycle plant, which passes through the said 3-way valve (21), it is expanded with the expansion valve (37), it is evaporated in the said Rankine cycle plant condenser (20) on the coil (36) external surface, the resulting vapor becomes part of said vapor (18) and is superheated in the said subcooler (17) and it is absorbed in the said absorber (4), and the not evaporated part of condensed said vapor (34) is stored in the said starage tank (25), further on the said vapor (34) condensed in the said coil (36) is stored in the liquid storage tank (38), it is pumped with the help of the pump (39) by means of the pipe (40) from the intermediate pressure till the high pressure of the said cooling cycle plant condenser (13) and it is mixed up with the refrigerant condensate in the said condenser storage tank (15), in order to close the Rankine cycle plant and CRAC.

2. Invention according to claim 1, **characterized in that** CRAC is conceived in such a way that it can operate in full cooling mode, when the vapor fraction (11) equals unit, in full working mode, when the vapor fraction (29) varies within *f ≅ 0.67 - 0.98*, or in cogeneration of working and cooling, when both vapor fractions (11) and (29) have intermediate complementary values between zero and unit.

3. Invention according to claims 1 and 2, **characterized in that** *i, i* = *2,3,...,n,* CRAC based plants are connected serially and in parallel in a thermal cascade, supplied by a sensible heat source, a sink source and a source to be cooled, in order to form multi-effect working / cooling cycle based plants, according to MeW/CC rules 1-4 and Table 1, positions 2-8.

4. Invention according to claim 1 and 2, **characterized in that** *i, i* = *2,3,...,n,* CRAC based plants are connected serially in a thermal cascade, supplied by a latent heat source, a sink source and a source to be cooled, in order to form multi-effect working / cooling cycle based plants, according to MeW/CC rules 1-4 and Table 2, positions 2-4.

5. Invention according to claims 1, 2, 3 and 4, **characterized in that** a MeW/CC based plant provided with *i, i = 2,3,...,n* CRAC subcycles plants can confme the cooling production to the 1^{st} CRAC subcycle plant, in order to increase the working production.

6. Invention according to claims 1, 2, 3, 4 and 5 of a treble-effect working/cooling plant consisting of three CRAC subcycles plants thermally connected by means of a double parallel double serial cascade and supplied by a sensible heat source, **characterized in that** the heat released by absorber (45), condenser (46) and rectifier (47), all belonging to CRAC (43) subcycle plant, is recovered by an intermediary heat transfer fluid covering in series the circuit consisting of pipe (48), absorber coil (49), pipe (50), condenser coil (51), pipe (52) and rectifier coil (53), it is transported by means of pipe (54) and it is released by means of coil (55) to vapor superheater (56) and further by means of pipe (57) and coil (58) to generator (59) of CRAC (41), similarly, the heat released by absorber (60), condenser (61) and rectifier (62), all belonging to CRAC (42) subcycle plant, is recovered by an intermediary heat transfer fluid covering serially the circuit consisting of pipe (63), absorber coil (64), pipe (65), condenser coil (66), pipe (67), rectifier coil (68) and pipe (69), connected to pipe (54), it is transported by means of the same pipe (54) and it is released by means of coil (55) to vapor superheater (56) and further by means of pipe (57) and coil (58) to generator (59) of CRAC (41), overlapping in this way the heat supply of superheater (56) and generator (59) coming of CRAC (43), the heat coming of the sensible heat source (44) is serially supplying firstly by means of pipe (70) and coil (71) the vapor superheater (72), secondly by means of pipe (73) and coil (74), the generator (75), both of CRAC (43), then by means of pipe (76) and coil (77), the vapor superheater (78) and by means of pipe (79) and coil (80), the generator (81), both of CRAC (42), then by means of pipe (82), connected to pipe (54) and coil (55), the vapor superheater (56) and finally by means of pipe (57) and coil (58), the generator (59), both of CRAC (41), overlapping in this way the heat supply of superheater (56) and generator (59) coming of CRAC (42) and CRAC (43), the return of intermediary heat transfer fluid is ensured by the pump (83), mounted on pipe (84), connected to coil (58) of generator (59) and a return piping, consisting of a first 3-way valve (85) which supplies, on one side, the heat recovery circuit of CRAC (42) subcycle plant by means of the pipe (63) and a pipe (86) connected to a second 3-way valve (87), on the other side, which to its turn supplies the recovery circuit of CRAC (43) subcycle plant by means of the pipe (48), on one side, and a final pipe (88), connected to the inlet of the sensible heat source (44), on the other side, in such a way that the unique high temperature heat supply of superheater (72) and generator (75) of CRAC (43) subcycle plant from the sensible heat source (44) has as 1^{st} useful effect a working yield of the turbogenerator (89), the unique middle temperature heat supply of superheater (78) and generator (81) of the CRAC (42) subcycle plant from the heat source (44) has as 2^{nd} useful effect a working yield of the turbogenerator (91), and the low temperature heat supply of superheater (56) and generator (59) of CRAC (41), coming of the heat released by CRAC (42) and CRAC (43) subcycles plants and of the external heat source (44), has as 3^{rd} useful separate or combined working and cooling yield, obtained by the turbogenerator (93) and desorber-evaporator (94) of CRAC (41) subcycle plant, respectively.

7. Invention according to claims 1, 2, 3, 4, 5 and 6 of a treble-effect working/cooling plant consisting of three CRAC subcycles plants thermally connected by means of a treble serial cascade, supplied by a latent heat source, **characterized in that** the latent heat (98) supplies the superheater (99) and the generator (100) of CRAC 97 by means of an intermediary heat transfer fluid covering a closed circuit consisting of pump (101), mounted on the heat source outlet pipe (102), superheater coil (103), pipe (104) and generator coil (105), connected to heat source inlet pipe (106), the heat recovered from absorber (107), condenser (108) and rectifier (109), all belonging to CRAC (97) subcycle plant, is transferred to CRAC (96) subcycle plant superheater (119) and generator (122) by an intermediary heat transfer fluid covering in series the circuit consisting of pump (110) mounted on pipe (111), absorber coil (112), pipe (113), condenser coil (114), pipe (115), rectifier coil (116), pipe (117), coil (118) of superheater (119), pipe (120), coil (121) of generator (122) and pipe (111), to close the circuit, the heat recovered from absorber (123), condenser (124) and rectifier (125), all belonging to CRAC (96) subcycle plant, is transferred to CRAC (95) subcycle plant superheater (135) and generator (138) by an intermediary heat transfer fluid covering in series the circuit consisting of pump (126) mounted on pipe (127), absorber coil (128), pipe (129), condenser coil (130), pipe (131), rectifier coil (132), pipe (133), coil (134) of superheater (135), pipe (136), coil (137) of generator (138) and pipe (127), to close the circuit, in such a way that the unique high temperature heat supply of superheater (99) and generator (100) of CRAC (97) subcycle plant from the heat source (98) has as 1^{st} useful effect a working yield of the turbogenerator (139), the middle temperature heat supply of superheater (119) and generator (122) of CRAC (96) subcycle plant which recovers the heat released by the CRAC (97) has as 2^{nd} useful effect a working yield of the turbogenerator (140), and the low temperature heat supply of superheater (135) and generator (138) of CRAC (95), coming of the heat released by CRAC (96) has as 3^{rd} useful separate or combined working and cooling yield, obtained by the turbogenerator (141) and desorber-evaporator (142) of CRAC (95) subcycle plant, respectively.
